Europäisches Patentamt

European Patent Office

Office européen des brevets

(11) Veröffentlichungsnummer: **0 185 188**
**B1**

(12) **EUROPÄISCHE PATENTSCHRIFT**

(45) Veröffentlichungstag der Patentschrift: 04.04.90

(51) Int. Cl.⁵: **B 23 Q 11/08**

(21) Anmeldenummer: **85114178.8**

(22) Anmeldetag: **07.11.85**

(54) Kabine.

(30) Priorität: 18.12.84 DE 3446036
22.04.85 DE 8511949 u

(43) Veröffentlichungstag der Anmeldung:
25.06.86 Patentblatt 86/26

(45) Bekanntmachung des Hinweises auf die
Patenterteilung:
04.04.90 Patentblatt 90/14

(84) Benannte Vertragsstaaten:
CH DE FR GB IT LI

(56) Entgegenhaltungen:
CH-A- 624 169
DE-A-2 445 443
DE-A-2 751 520
FR-A-2 395 364
GB-A-2 076 870
US-A-4 258 511

(73) Patentinhaber: Gebr. Hennig GmbH
Dorfstrasse 41
D-8045 Ismaning (DE)

(72) Erfinder: Stöhr, Albert
Am Wiegenberg 8
D-8015 Markt Schwaben (DE)

(74) Vertreter: Tetzner, Volkmar, Dr.-Ing. Dr. jur.
Van-Gogh-Strasse 3
D-8000 München 71 (DE)

Courier Press, Leamington Spa, England.

**Beschreibung**

Die Erfindung betrifft eine Kabine entsprechend dem Oberbegriff des Anspruches 1. Sie ist insbesondere zur Verkleidung von Werkzeugmaschinen, jedoch auch für viele andere technische Zwecke geeignet.

Aus de Praxis sind Kabinen bekannt, deren tragendes Gerüst durch eine Anzahl von miteinander verschraubten oder verschweißten horizontalen und vertikalen Profilträgern gebildet wird, auf die Verkleidungsplatten aufgesetzt sind. Der wesentliche Nachteil dieser Auführungen besteht in dem verhältnismäßig großen Montageaufwand. Ungünstig ist weitern, daß Wartungs- und Reparaturarbeiten in der Kabine (beispielsweise ein Austausch größerer Aggregate) meist ein weitgehendes Zerlegen der Kabine bedingen.

Durch die US—A—4 258 511 ist ferner eine Kabine entsprechend dem Oberbegriff des Anspruches 1 bekannt, bei der die Seitenwände der Kabine bildenden Paneele selbsttragend ausgeführt sind und durch einfaches Anheben innerhalb des die Oberkante der Paneele übergreifenden U-förmigen Querschnittsprofiles des Deckrahmens von Grundund Deckrahmen gelöst werden können.

Bei einer derartigen Ausführung genügt zur Halterung der Seitenwände die Anordnung eines über Eckpfosten verbundenen Grund- und Deckrahmens, so daß die Seitenwände der Kabine von störenden Zwischenträgern freigehalten werden können. Hierdurch wird nicht nur die Montage der Kabine wesentlich erleichtert, sondern es lassen sich im Bedarfsfalle (insbesondere für Wartungs- und Umbauzwecke) durch Herausnehmen einzelner Paneele frei Durchtrittsöffnungen schaffen, die sich über die Gesamthöhe der Kabine erstrecken.

Bei der durch die US—A—4 258 511 bekannten Kabine stoßen benachbarte Paneele über stirnseitige Dichtungselemente stumpf aneinander.

Der Erfindung liegt die Aufgabe zugrunde, eine Kabine entsprechend dem Oberbegriff des Anspruches 1 so weiterzuentwickeln, daß — unter Beibehaltung der Möglichkeit, nachträgliche Änderungen in der Gestaltung der Seitenwände auf besonders einfache Weise, insbesondere ohne ein Zerlegen der gesamten kabine, durchführen zu können — eine verbesserte Abdichtung zwischen benachbarten Paneelen erreicht wird.

Diese Aufgabe wird erfindungsgemäß duch die kennzeichnenden Merkmale des Anspruches 1 gelöst. Zweckmäßige Ausgestaltungen der Erfindung sind Gegenstand der Unteransprüche.

Einige Ausführungsbeispiele der Erfindung sind in der Zeichnung veranschaulicht. Es zeigen

Fig. 1 eine Schemadarstellung einer erfindungsgemäßen Kabine,

Fig. 2 einen Horizontalschnitt (längs der Linie II—II der Fig. 1) durch zwei mit ihren Stirnkanten ineinandergreifende Paneele,

Fig. 3 einen Vertikalschnitt längs der Linie III—III der Fig. 1,

Fig. 4 einen Horizontalschnitt (längs der Linie IV—IV der Fig. 1) durch ein Verschlußelement,

Fig. 5 einen Schnitt (ähnlich Fig. 4) durch ein weiteres Ausführungsbeispiel eines Verschlußelementes,

Fig. 6 einen Horizontalschnitt durch einige Paneele und ein dazwischen angeordnetes Verschlußelement,

Fig. 7 einen Vertikalschnitt durch eine abgewandeltes Ausführungsbeisepiel des Grundrahmens,

Fig. 8 einen Schnitt durch ein weiteres Verschlußelement.

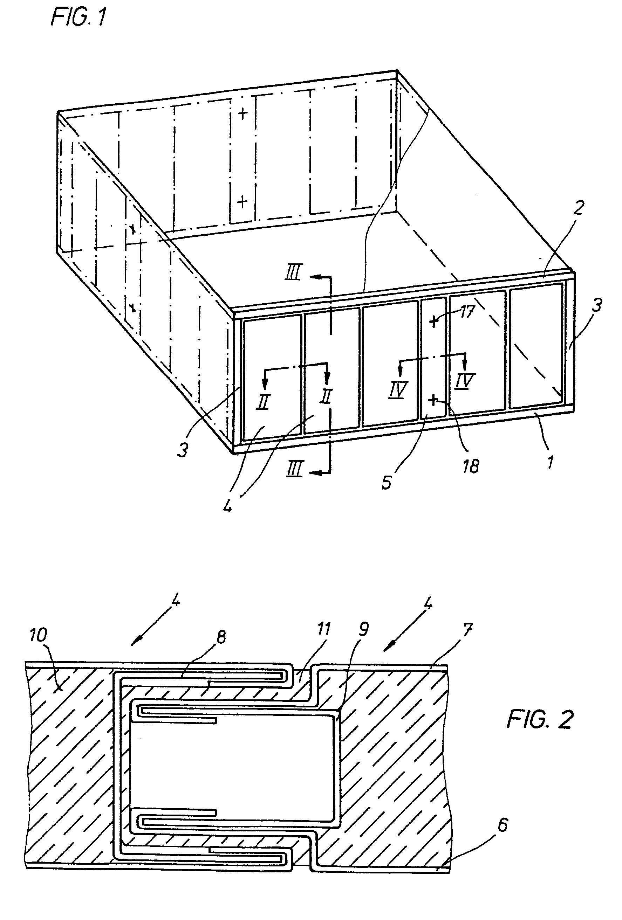

Die in Fig. 1 ganz schematisch dargestellte Kabine, die beispielsweise zur Verkleidung einer Werkzeugmaschine bestimmt ist (eventuell als auch Schallschutzkabine dient), enthält einen Grundrahmen 1, einen Deckrahmen 2, Eckteile 3, Paneele 4 sowie im Bereich jeder Seitenwand ein Verschlußelement 5.

Ein Ausführungsbeispiel der die Seitenwände bildenden Paneele 4 ist in Fig. 2 dargestellt. Die Paneele enthalten eine beispielsweise aus Blech bestehende Außenverkleidung 6 und 7 an den beiden Breitseiten sowie 8 und 9 an den Stirnkaten. Die Außenverkleidung der Paneele umschließt eine Isoliermasse 10.

Die Stirnkanten der Paneele 4 sind komplementär zueinander ausgebildet. Wie Fig. 2 erkennen läßt, besitzt die eine Stirnkante (des linken Paneeles 4) ein U-förmiges Querschnittsprofil, während die Stirnkante des anderen (rechten) Paneeles ein steckerartiges Querschnittsprofil aufweist. Zwischen den beiden mit ihren komplementär ausgebildeten Stirnkanten ineinandergeschobenen Paneelen ist ein Dichtungselement 11 angeordnet.

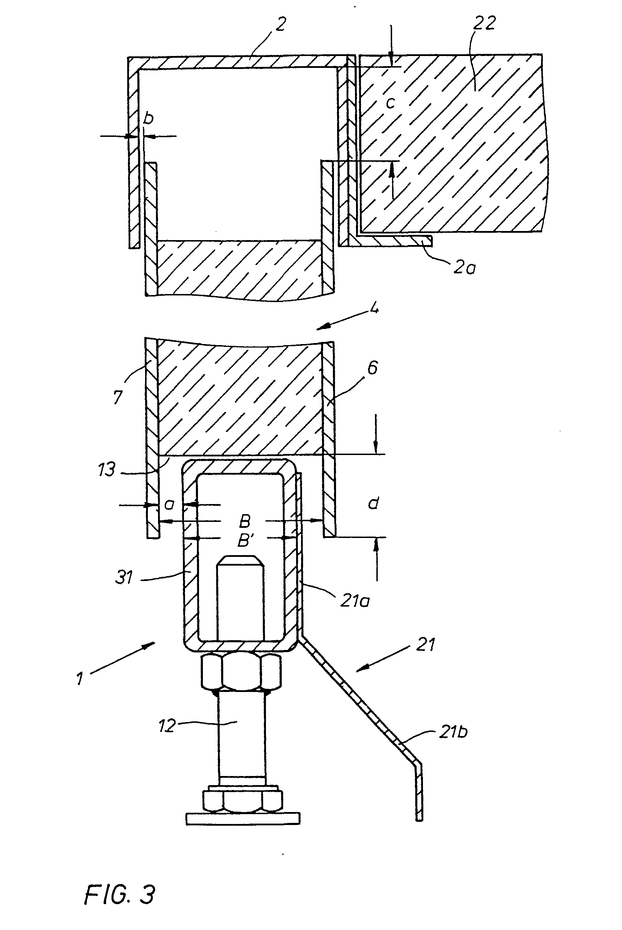

Der Grundrahmen des in Fig. 3 dargestellten Ausführungsbeispieles enthält einen einzigen Profilträger 31 von kastenförmigem Querschnitt, der sich über als Stellschrauben ausgebildete, höhenverstellbare Stützen 12 auf dem Boden abstützt.

Der Profilträger 31 des Grundrahmens 1 wird von der mit U-förmigem Querschnittsprofil ausgebildeten unteren Kante 13 der Paneele 4 übergriffen. Die lichte Breite B des U-förmigen Querschnittsprofiles der unteren Paneelkante ist dabei mindestens so groß wie die äußeren Breite B' des Grundrahmen-Profilträgers 31.

Bei dem dargestellten Ausführungsbeispiel ist zwischen de Außenverkleidungen 6 un 7 der Paneele 4 und dem Profilträger 31 des Grundrahmens 1 ein lichter Abstand a vorhanden.

Der Deckrahmen 2 besitzt ein nach unten offenes U-förmiges Querschnittsprofil und übergreift die Paneele 4. Zwischen den Außenverkleidungen 6, 7 der Paneele 4 und den Seitenwänden des Deckrahmens 2 is gleichfalls ein gewisses Spiel b vorgesehen.

Die oberen Kanten der Paneele 4 besitzen gegenüber dem Deckrahmen 2 einen Abstand c, der größer ist als das Maß d, um das die Paneele 4 den Profilträger 31 des Grundrahmens 1 übergreifen. Die Paneele 4 können infolgedessen so weit gegenüber dem Deckrahmen 2 angehoben werden, daß die untere Kante der Paneele 4 vom Grundrahmen 1 freikommt. Das Spiel b zwischen den Paneele 4 und den Seitenwänden des Deckrahmens 2 ermöglicht ferner ein Kippen der Paneele 4 innerhalb des Deckrahmens 2, so daß die anagehobenen und gekippten Paneele 4 durch Herausziehen schräg nach unten vom Deckrahmen 2 und vom Grundrahmen 1 gelöst werden können.

An der Innenseite des Grundrahmen-Profilträgers 31 ist ein zur Ableitung von Kühlmittel und Spänen dienendes Leitblech 21 vorgesehen, dessen oberer Teil 21a vom U-förmigen Querschnittsprofil der unteren Kante der Paneele 4 übergriffen wird und dessen unterer Teil 21b in das Innere der Kabine hineinragt.

An der Innenseite des Deckrahmens 2 ist ferner ein Ansatz 2a vorgesehen, der zur Auflage von Deckelementen 22 dient.

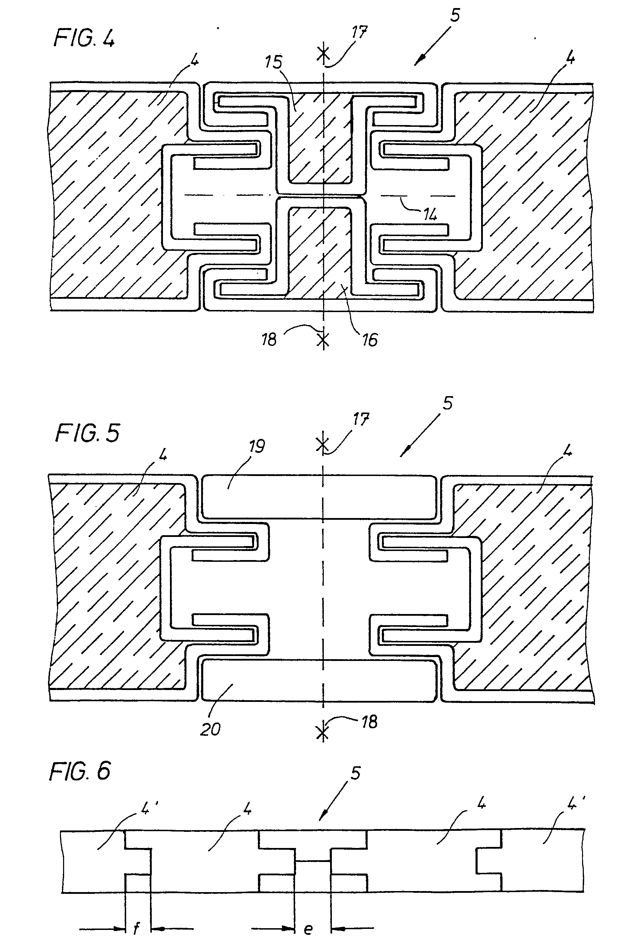

Fig. 4 zeigt ein Ausführungsbeispiel eines Verschlußelementes 5, das vorzugsweise in jeder Seitenwand der Kabine vorgeshen ist. Dieses Verschlußelement 5 besitzt im Bereich beider Stirnkanten ein U-förmiges Querschnittsprofil und ist in der vertikalen Längsmittelebene 14 geteilt. Das Verschlußelement 5 besteht damit aus zwei Teilen 15 und 16, die durch Verbindungselemente 17, 18 (beispielsweise Schrauben) lösbar miteinander verbunden sind.

Die beiden dem Verschlußelement 5 benachbarten Paneele 4 weisen an ihren dem Verschlußelement 5 zugewandten Stirnkanten ein steckerartiges Querschnittsprofil auf. Das Verschlußelement 5 schließt bündig mit den Breitseiten dieser bei den Paneele 4 ab.

Bei dem in Fig. 4 dargestellten Ausführungsbeispiel enthalten die beiden Teile 15, 16 des Verschlußelementes 15 gleichfalls eine Außenverkleidung (beispielsweise aus Blech) und eine dazwischen angeordnete Isoliermasse. Im Vertikalschnitt kann das Verschlußelement 5 in gleicher Weise wie die Paneele 4 ausgebildet sein (vgl. Fig. 3). Nach Lösen der Verbindungselemente 17 und 18 kann zunächst das auf der Außenseite der Kabine befindliche Teil 16 des Verschlußelementes 5 nach außen entfernt werden; es wird zu diesem Zweck leicht angehoben und etwas gekippt und kann dann vom Grundrahmen 1 und vom Deckrahmen 2 gelöst werden. Das andere Teil 15 des Verschlußelementes 5 kann anschließend gleichfalls entweder nach innen oder außen mühelos ausgebaut werden.

Ist auf diese Weise das verschlußelement 5 entfernt, so kann — wie aus Fig. 6 hervorgeht — eines der beiden dem Verschlußelement 5 benachbarten Paneele 4 so weit in Längsrichtung der Seitenwand der Kabine verschoben werden, daß der Eingriff zwischen den stirnseitigen Kanten dieses Paneels 4 und des nächsten Paneels 4' aufgehogen ist. Zu diesem Zweck muß das Kernmaß e (Fig. 6) des Verschlußelementes 5 etwas größer als da Maß f sein, mit dem die Stirnkanten benachbarter Paneele 4, 4' ineinander eingreifen.

Ist auf diese Weise nach Lösen des Verschlußelementes 5 und Verschieben des benachbarten Paneeles 4 die Eingriffsverbindung dieses Paneeles 4 zum nächsten Paneele 4' aufgehoben, so kann des Paneel 4 in der anhand von Fig. 3 bereits erläuterten Weise durch Anheben und Kippen aus dem Grundrahmen 1 und dem Deckrahmen 2 entfernt werden. Auf diese Weisen lassen sich nacheinander alle gewünschten Paneele der Seitenwände entfernen, ohne daß die Grundstruktur der Kabine, insbesondere der Grundrahmen 1, der Deckrahmen 2 und die Eckteile 3, demontiert werden müssen.

Auf diese Weise lassen sich damit sehr einfach alle gewünschten nachträglichen Änderungen in den Seitenwänden der Kabine rasch durchführen: Es können Fenster und Türen eingesetzt und in ihrer Lage verändert werden. Es kann weiterhin zu Montagezwecken eine größere Durchgangsöffnung durch Herausnehmen einiger Paneele geschaffen werden.

Bei dem in Fig. 5 schematisch dargestellten weiteren Ausführungsbeispiel besteht das Verschlußelement 5 aus zwei ebenen Platten 19, 20, die durch die lösbaren Verbindungselemente 17 bzw. 18 miteinander verbundent sind. Bei diesem vereinfachten Ausführungsbeispiel ist somit im Bereich des Verschlußelementes 5 keine Isolation vorgesehen. Im übrigen ergeben sich jedoch durch dieses Verschlußelement die gleichen Vorteile, wie sie oben bereits für die Variante gemäß Fig. 4 erläutert wurden.

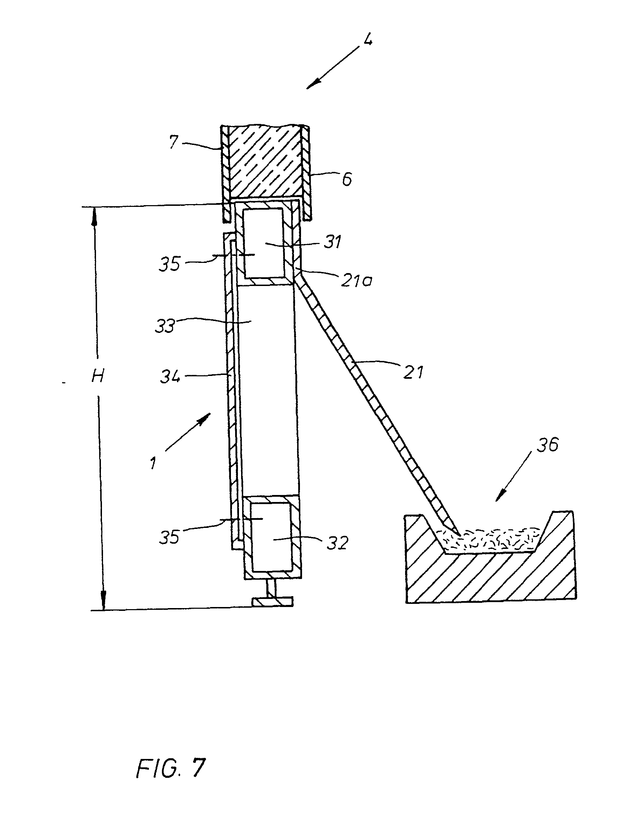

Fig. 7 zeigt ein zweites Ausführungsbeispiel des Grundrahmens 1 der erfindungsgemäßen Kabine. Dieser Grundrahmen 1 enthält einen oberen Profilträger 31 von kastenförmigen Querschnitt sowie einen parallel zum oberen Profilträger 31 und mit Abstand von diesem angeordneten weiteren Profilträger 32, der sich auf dem Boden abstützt. Der obere Profilträger 31 wird in der bereits anhand von Fig. 3 erläuterten Weise vom U-förmigen Querschnittsprofil der Unterkante der Paneele 4 übergriffen.

Die Profilträger 31 und 32 sind in gewissen Abständen durch vertikale Verbindungselemente 33 miteinander verbunden. Der freie Raum zwischen den beiden Profilträgern 31, 32 wird nach außen hin durch lösbare Verkleidungselemente 34 abgedeckt, die beispielsweise durch Schrauben 35 mit dem Profilträgern 31, 32 verbunden sind.

Am oberen Profilträger 31 ist ferner der Teil 21a eines Leitbleches 21 befestigt, das auftreffende Späne einem im Innern der Kabine angeordneten Späneförderer 36 zuführt.

Durch die Verwendung von zwei Profilträgern 31, 32, deren lichter Zwischenraum durch Verkleidungselemente 34 nach außen hin abgedeckt ist, kann man dem Grundrahmen 1 trotz leichter, materialsparender Bauweise eine so große Höhe H (beispielsweise 1000 mm) geben, daß am Profilträger 31 befestigte Leitblech 21 die erwünschte steile Neigung erhält. Die Befestigung des Leitbleches 21 am Profilträger 31 wirft keinerlei Probleme auf. Vorteilhaft ist dabie, daß der am Profilträger 31 befestigte obere Teil 21a des Leitbleches 21 von der Außenverkleidung 6 des Paneeles 4 teilweise übergriffen wird.

Durch Entfernen eines oder mehrerer Verkleidungselemente 34 ist es bei der in Fig. 7 dargestellten Ausführung des Grundrahmens 1 möglich, von außen Zugang zum Bodenbereich der Kabine zu erhalten, ohne hierfür Paneele 4 der Seitenwände entfernen zu müssen. Auf diese Weise lassen sich insbesondere kleinere Bauteile der Kabine auf sehr einfache Weise ein- und ausbauen.

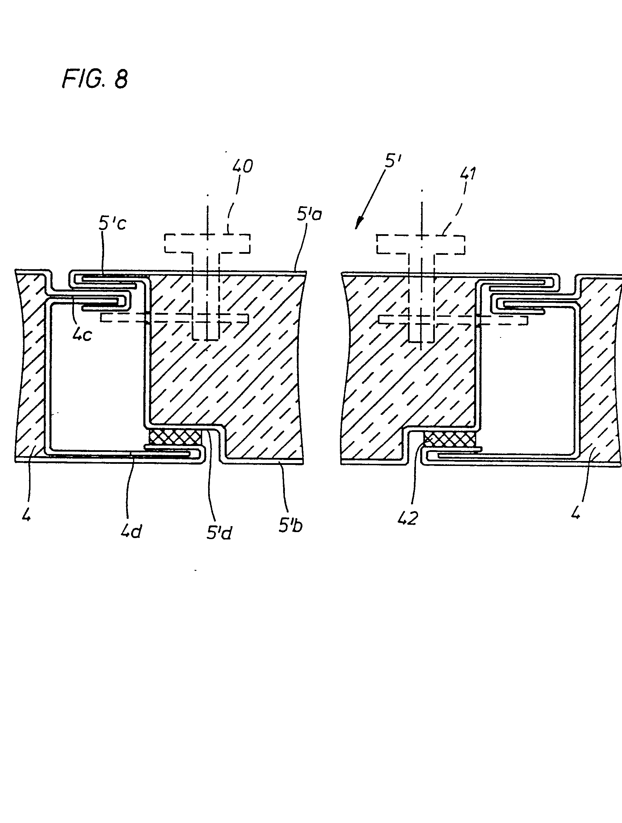

Fig. 8 zeigt als weiteres Ausführungsbeispiel ein Verschlußelement 5', das im Unterschied zu den bisher erläuterten Ausführungsformen ungeteilt ausgebildet ist. Das Verschlußelement 5' besitzt einen in der Breite abgestuften Querschnitt und ist auf der in Fig. 8 oben angenonmmenen Außenseite der kabine breiter als auf der Innenseite. Die Außenhaut 5'a und 5'b des Verschlußelementes 5' bildet auf der Außenseite der Kabine einen Falz 5'c, der auf einen entsprechenden Falz 4c der beiden angrenzenden Paneele so aufliegt, daß die Außenfläche des Verschlußelementes 5' bündig mit der Außenfläche der Paneele 4 abschließt.

An der der Innenseite der kabine zugewandten Fläche ist das Verschlußelement 5' mit einer Stufe 5'd versehen, die über eine Dichtung 42 auf einem Falz 4d der Paneele 4 aufliegt.

Das Verschlußelement 5' ist mit — gestrichelt angedeuteten — schwenkbaren Verbindungselementen 40, 41 versehen, die von der Außenseite der Kabine zugänglich sind un dirch die das Verschlußelement 5' mit den beiden benachbarten Paneelen 4 verriegelbar ist.

Nach Schwenken der Verbindungselemente 40, 41 in die Entriegelungsstellung kann das Verschlußelement 5' in der bereits beschriebenen Weise so weit angehoben werden, daß die Eingriffsverbindung zwischen dem Verschlußelement 5' und dem Grundrahmen 1 aufgehoben ist, so daß das Verschlußelement 5' vom Grundrahmen 1 und Deckrahmen 2 gelöst werden kann. Anschließend kann dann eines der beiden benachbarten Paneele 4 so weit in Längsrichtung der Seitenwand verschoben werden, daß der Eingriff zwischen den stirnseitigen Kanten dieses Paneeles 4 und denen des nächsten Paneeles 4' (vgl. Fig. 5) aufgehoben ist und das seitlich verschobene Paneel 4 angehoben und von Grund- dund Deckrahmen gelöst werden kann.

Als "Paneele" sind im Rahmen der Erfindung nicht nur zusammengesetzte Wandelemente der bei den Ausführungsbeispielen beschriebenen Bauart, sondern zum Beispiel auch einfache Platten aus Blech oder Kunstoff zu verstehen.

**Patentansprüche**

1. Kabine, insbesondere zur Maschinenverkleidung, enthaltend
a) einen Grundrahmen (1) mit weingstens einem Profilträger (31) von kastenförmigen Querschnitt,
b) eien Deckrahmen (2), der eine nach unten offenes U-förmiges Querschnittsprofil aufweist,
c) die Seitenwände der Kabine bildende, selbstragende Paneele (4), deren Oberkante in das U-förmige Querschnittsprofil des Deckrahmens (2) eingreift und deren Unterkante in Eingriff mit dem Grundrahmen (1) steht,
d) wobei die einzelnen Paneele (4) gegenüber dem Deckrahmen (2) innerhalb des U-förmigen Querschnittsprofiles so weit anhebbar sind, daß die Eingriffsverbindung zwischen der Unterkante dieses Paneeles und dem Grundrahmen (1) aufgehoben und das Paneel von Grund- und Deckrahmen lösbar ist,
gekennzeichnet durch folgende Merkmale:
e) die Paneele (4) weisen an ihren unteren Kanten (13) ein nach unten offenes, u-förmiges Querschnittsprofil auf, dessen lichte Breite (B) mindestens so groß wie die äußere Breite (B') des Grundrahmen-Profilträgers (31) ist und das mit den beiden Schenkeln des U den Grundrahmen-Profilträger (31) teilweise übergreift,
f) die Paneele (4) weisen ferner komplementär ausgebildete Stirnkanten auf, über die sie mit den benachbarten Paneelen in Eingriff stehen,
g) in wenigstens einer Seitwenwand der Kabine ist ein zwischen zwei Paneelen (4) angeordnetes Verschlußelement (5, 5') voregeshen,
h) nach Lösen von Verbindungselementen (17, 18, 40, 41) ist das Verschlußelement (5') bzw. ein Teil des Verschlußelementes (5) gegenüber dem Deckrahmen (2) so weit anhebbar, daß die Eingriffsverbindung zwischen dem Verschulßelement und dem Grundrahmen (1) aufgehoben und das Verschlußelement von Grund- und Deckrahmen lösbar ist,
i) die Breite des Verschlußelementes (5, 5') ist so groß gewählt, daß nach Entfernen des Verschlußelementes das benachbarte Paneel (4) so weit in Längsrichtung der Seitenwand verschiebbar ist, daß der Eingriff zwischen den Stirnkanten dieses Paneeles (4) und des nächsten Paneeles (4') aufgehogen ist.

2. Kabine nach Anspruch 1, dadurch gekennzeichnet, daß das Verschlußelement (5) in einer vertikalen Ebene (14) geteilt ist, wobei die beiden Teile (15, 16 bzw. 19, 20) des Verschlußelementes (5) im montierten Zustand durch die Verbindungselemente (17, 18) miteinander verbunden sind.

3. Kabine nach Anspruch 1, dadurch gekennzeichnet, daß das Verschlußelement (5') einteilig ausgegildet und über die von der Außenseite der Kabine zugängigen Verbindungselemente (40, 41) mit den angrenzenden Paneelen (4) verbindbar ist.

4. Kabine nach Anspruch 1, dadurch gekennzeichnet, daß eine Stirnkante der Paneele (4) ein U-förmiges Querschnittsprofil und die andere Stirnkante ein steckerartiges Querschnittsprofil besitzt.

5. Kabine nach Anspruch 1, dadurch gekennzeichnet, daß die beiden dem Verschlußelement (5) benachbarten Paneele (4) an ihren dem Verschlußelement zugewandten Stirkanten ein steckerartiges Querschnittsprofil aufweisen und das Verschlußelement bündig mit den Breitseiten dieser beiden Paneele abschließt.

6. Kabine nach Anspruch 5, dadurch gekennzeichnet, daß das Verschlußelement (5) im Bereich beider Stirnkanten ein U-förmiges Querschnittsprofil aufweist und in der vertikalen Längsmittelebene (14) geteilt ist.

7. Kabine nach Anspruch 5, dadurch gekennzeichnet, daß das Verschlußelement (5) aus zwei durch die lösbaren Verbindungselemente (17, 18) miteinander verbundenen ebenen Platten (19, 20) besteht.

8. Kabine nach Anspruch 1, dadurch gekennzeichnet, daß an der Innenseite des Grundrahmens (1) ein zur Ableitung von Kühlmittel und Spänen dienendes Blech (21) vorgesehen ist, dessen oberer Teil (21a) von U-förmigen Querschnittsprofil der unteren Kante der Paneele (4) übergriffen wird und dessen unterer Teil (21b) in das Innere der Kabine hineinragt.

9. Kabine nach Anspruch 1, dadurch gekennzeichnet, daß der Grundrahmen (1) einen einzigen Profilträger (31) von kastenförmigem Querschnitt enthält, der sich über vorzugsweise höhenverstellbare Stützen (12) auf den Boden abstützt.

10. Kabine nach Anspruch 1, dadurch gekennzeichnet, daß der Grundrahmen (1) aus folgenden Teilen besteht:

a) einem von U-förmigen Querschnittsprofil der Paneel-Unterkante (13) übergriffenen oberen Profilträger (31) von kastenförmigem Querschnitt,

b) einem parallel zum oberen Profilträger (31) und mit Abstand von diesem angeordneten, auf dem Boden abgestützten unteren Profilträger (32),

c) vertikalen Verbindungselementen (33) zwischen beiden Profilträger (31, 32),

d) den freien Raum zwischen den beiden Profilträgern (31, 32) nach außen abdeckenden, lösbaren Verkleidungselementen (34).

**Revendications**

1. Cabine, destinée en particulier à l'habillage de machines, comprenant:

a) un châssis de fond (1) cmportant au moins une poutre profilée (31) de section transversale en caisson,

b) un châssis de couverture (2) présentant un profil transversal en étrier ouvert vers le bas,

c) de panneaux autoporteurs (4) formant les cloisons latérales de la cabine, dont le bord supérieur s'insère dans le profil en étrier du châssis de couverture (2) et dont le bord inférieur est engagé sur le châssis de fond (1),

d) les panneaux individuels (4) pouvant être suffisamment soulevés par rapport au châssis de couverture (2) à l'intérieur du profil en étrier de celui-ci pour permettre d'éliminer l'engagement entre le bord inférieur de ce panneau et le châssis de fond (1) et de démonter le panneau du châssis de fond et du châssis de couverture,

caractérisée par les particularités suivantes:

e) les panneaux (4) présentent le long der leur bord inférieur (13) un profil transversal en étrier ouvert vers le bas et dont la largeur de l'ouverture (B) est au moins aussie grande que la largeur extérieure (B') de la poutre profilée (31) du châssis de fond, les deux ailes de ce profil en étrier chevauchant partiellement cette poutre (31) du châssis de fond,

f) les panneaux (4) comportent par ailleurs des bords latéraux de formes complémentaires qui permetten à des panneaux voisins de s'engager l'un dans l'autre,

g) un élément de blocage (5, 5') disposé entre deux panneaux (4) étant prévu dans au moins l'une des cloisons latérales de la cabine,

h) le démontage d'organes de fixation (17, 18; 40, 41)) autorisant le soulèvement de l'élément de blocage (5') ou d'une partie de l'élément de blocage (5) par rapport au châssis de couverture (2) sur une distance suffisante pour supprimer l'engagement entre ce élément de blocage et le châssis de fond (1) et permettre le dégagement de cet élément de blocage du châssis de fond et du châssis de couverture,

i) la largeur adoptée de l'élément de blocage (5, 5') étant suffisamment grande pour qu'après l'enlèvement de ce dernier, le panneau voisin (4) soit translatable sur une distance suffisante dans la direction de la longueur de la cloison latérale pour permittre d'éliminer l'engagement entre le bord latéral de ce panneau (4) et celui du panneau voisin (4').

2. Cabine selon la revendication 1, caractérisée en ce que l'élément de blocage (5) est divisé dans un plan vertical (14), les deux parties (15, 16 ou 19, 20) de l'élément de blocage (5) étant maintenues en position de montage au moyen d'organes de fixation (17, 18).

3. Cabine selon la revendication 1, caractérisée en ce que l'élément de blocage (5') est en une pièce et des organes de fixation (40, 41) accessible par le côté extérieur de la cabine le relient aux panneaux voisins (4).

4. Cabine selon la revendication 1, caractérisée en ce qu'un bord latéral des panneaux (4) présente un profil transversal en étrier et l'autre bord latéral, un profil transversal en forme de languette.

5. Cabine selon la revendication 1, caractérisée en ce que les deux panneaux (4) voisins de l'élément de blocage (5) présentent le long de leur board latéral tourné vers ce dernier un profil transversal en forme de languette et l'élément de blocage est à l'alignement de côtés larges de ces deux panneaux.

6. Cabine selon la revendication 1, caractérisée en ce que l'élément de blocage (5), qui présente sur les deux bords latéraux un profil transversal en étrier, est divisé dans le plan médian longitudinal et vertical (14).

7. Cabine selon la revendication 1, caractérisée en ce que l'élément de blocage (5) se compose de deux plaques planes (19, 20) assemblées par des organes de fixation amovibles (17, 18).

8. Cabine selon la revendication 1, caractérisée en ce qu'une tôle (21), destinée à l'évacuation de réfrigérant et de copeaux et dont la partie supérieure (21a) est recouverte par le profil transversal en étrier du bord inférieur des panneaux (4), tandis que sa partie inférieure (21b) pénètre à l'intérieur de la cabine, est prévue sur le côté intérieur du châssis de fond (1).

9. Cabine selon la revendication 1, caractérisée en ce que le châssis de fond (1) comprend une unique poutre profilée (31), de section en caisson, qui prend appui sur le sol par l'intermédiaire de supports (12) de préférence réglables en hauteur.

10. Cabine selon la revendication 1, caractérisée en ce que le châssis de fond (1) se compose des parties suivantes:

a) une poutre profilée supérieure (31) de section transversale en caisson et que chevauche le profil transversal en étrier du bord inférieur (13) des panneaux,

b) une poutre profilée inférieure (32) prenant appui sur le sol, disposée parallèlement à la poutre profilée supérieure (31) et à distance de cette dernière,

c) des éléments verticaux de liaison (33) situés entre les deux poutres profilées (31, 32),

d) de éléments de revêtement amovibles (34) recouvrant vers l'extérieur l'espace libre séparant les deux poutres profilées (31, 32).

## Claims

1. Cabin, in particular for covering machines, comprising:

a) a base frame (1), with at least one beam (31) of box-shape cross-section,

b) a top frame (2), which has a U-shaped cross-sectional profile which is open towards the bottom,

c) self-supporting panels (3e, 4) which form the side walls of the cabin, their upper edge engaging in the U-shaped cross-sectional profile of the top frame (2), whilst their lower edge engages with the base frame (1),

d) in which the individual panels can be raised relative to the top frame (2) within the U-shaped cross-sectional profile until the engagement between the lower edge of this panel and the base frame (1) can be released and the panel can be detached from the base frame and top frame, charactersided by the following features:

e) the panels (4) have on their lower edges (13) a U-shaped cross-section which is open towards the bottom, has an internal breadth (B) which is at least as great as the external breadth (B') of the base frame beam (31) and partially engages with both arms of the U over the base frame beam (31),

f) the panels (4) also have end edges of complementary construction by means of which they engage with the adjacent panels,

g) a closure element (5, 5') arranged between two panels (4) is provided in at least one side wall of the cabin,

h) after the connecting elements (17, 18, 40, 41) have been released the closure element (5') or a part of the closure element (5) can be reaised relative to the top element (2) until the engagement between the closure element and the base frame (1) is released and the closure element can be detached from the base frame and the top frame.

i) the breadth of the closure element (5, 5') is chosen to be such that after removal of the closure element the adjacent panel (4) can be removed in the longitudinal direction of the side wall until the engagement betwen the side edges of this panel (4) and the next panel (4') is released.

2. Cabin as claimed in claim 1, characterised in that the closure element (5) is divided in a vertical plane (14), the two parts (15, 16 or 19, 20) of the closure element (5) being connected to one another in the assembled state by the connecting elements (17, 18).

3. Cabin as claimed in claim 1, characterised in that the closure element (5') is constructed in one piece and can be connected to the adjacent panels (4) by means of the connecting elements (40, 41) which are accessible from the outside of the cabin.

4. Cabin as claimed in claim 1, characterised in that one side edge of the panels (4) has a U-shaped cross-section and the other side edge has a plug-like cross-section.

5. Cabin as claimed in claim 1, characterised in that the two panels (4) adjacent to the closure element (5) have a plug-like cross-section on their side edges facing the closure element and the closure element closes flush with the broad sides of these panels.

6. Cabin as claimed in claim 5, characterised in that the closure element (5) has a U-shaped cross-section in the region of both side edges and is divided in the vertical longitudinal central plane (14).

7. Cabin as claimed in claim 5, characterised in that the closure element (5) consists of two flat plates (19, 20) which are connected to one another by releasable connecting elements (17, 18).

8. Cabin as claimed in claim 1, characterised in that a baffle (21) which serves to deflect cooling agent and shavings is arranged on the inside of the base frame (1), the U-shaped cross-section of the lower edge of the panel (4) engages over the upper part (21a) of the baffle and the lower part (21b) thereof projects into the interior of the cabin.

9. Cabin as claimed in claim 1, characterised in that the base frame (1) contains one single beam (31) of box-shaped cross-section which is supported on the ground by supports (12) which are preferably adjustable in height.

10. Cabin as claimed in claim 1, characterised in that the base frame (1) consists of the following parts:

a) an upper beam (31) of box-shaped cross-section over which the U-shaped cross-section of the lower edge (13) of the panel engages,

b) a lower beam (32) which is arranged parallel to the upper beam (31) and spaced therefrom and is supported on the ground,

c) vertical connecting elements (33) between the two beams (31, 32),

d) releasable cover elements (34) which cover the free space between the two beams (31, 32) towards the exterior.

EP 0 185 188 B1

*FIG.1*

*FIG. 2*

1

FIG. 3

EP 0 185 188 B1

FIG. 4

FIG. 5

FIG. 6

*FIG. 7*

*FIG. 8*